# EUROPEAN PATENT SPECIFICATION

(11) **EP 1 390 649 B1**
(45) Date of publication and mention of the grant of the patent: **11.04.2007**
(21) Application number: 02724354.2
(22) Date of filing: 21.05.2002
(51) Int. Cl.: F16K 5/06, F16K 5/08

(54) **METHOD FOR THE MANUFACTURE OF A BALL VALVE BETWEEN TWO TUBES**
VERFAHREN ZUR HERSTELLUNG EINES KUGELVENTILS ZWISCHEN ZWEI ROHREN
PROCEDE DE FABRICATION D'UN ROBINET A TOURNANT SPHERIQUE ENTRE DEUX TUBES

(30) Priority: 23.05.2001 FI 20011081
(43) Date of publication of application: 25.02.2004
(73) Proprietor: NAVAL OY, 23801 Laitila (FI)
(72) Inventor: EKLÖF, Hannu, FIN-26950 Voiluoto (FI)
(74) Representative: Saijonmaa, Olli-Pekka
(86) International application number: PCT/FI2002/000435
(87) International publication number: WO 2002/095274

(56) References cited:
- US-A- 5 890 286

## Description

The object of the invention is a method for the manufacture of a ball valve between two tubes, in which method the ends of the tubes are sealed against a rotatable valve ball opening and closing the valve, and the valve ball and the ends of the tubes are surrounded by a sleeve-like cover to be seamed to the mantle surfaces of the tubes.

Ball valves are available in the markets provided with a full aperture, in which valve type the size of the ports of the valve ball approximately corresponds to the cross-section of the tubes sealed against the ball so that the valve does not substantially narrow the flow path formed by the tubes. In addition to these, ball valves with a reduced aperture are available in the markets, in which valves the ports are smaller than the cross-section of the flow path formed by the tubes. The operating principle of both the valve types is the same; the valve ball can be rotated around the axis perpendicular to the direction of the tubes with the help of a spindle connected to it so that the valve is open as the ports of the ball are turned towards the tubes and closed as the closed flanks of the ball are turned towards the tubes.

The last step in assembling the ball valve is to attach the sleeve-like cover, which is also called the valve body, surrounding the valve ball and the tube ends to the flanks of the tube by welding. The spatters that are generated in the welding can then become a danger to the valve ball fitted to the interior of the cover and to the gaskets for the tube ends against the ball. Upon rotating the valve ball, the attached spatters can damage the gaskets.

The patent specification US 5 890 286 of the applicant, which discloses the features of the preamble of claim 1, describes the manufacture of a ball valve with a full aperture, in which the tube ends coming against the valve ball are provided with a stepped projection, which forms the gasket housing for the gaskets for the tube ends without narrowing the flow path. As the welding joints attaching the valve body to the tube flanks remain behind the stepwise protruding ends of the tubes, seen from the direction of the valve ball, the projections act as spatter shields, preventing the welding spatters from getting to damage the valve ball and the gaskets. However, despite its advantages, the solution described in the specification does not provide a full protection against spatters. Further, the solution would be very difficult to apply to ball valves with reduced openings, if at all, and the specification does not contain such a description.

The welding technique that is at present most often applied to the assembling of ball valves is the MIG welding performed by using a welding wire and inert shielding gas. In welding, the metal melts at the seam, and the welding wire melts as a part of the generated welding bead. Wire welding is strongly heat-generating, and besides the welding spatters already mentioned, also heating will be a danger to the gaskets for the tube ends. Deformations caused by heat and the irregular quality of the welding seam, in other words, the difficulties to achieve a seam of uniform quality and without root defects, lead to strength problems and to the exposure of the welding seams to corrosion.

One central application of the ball valve are heating tubes, in which the valves have to endure stresses caused by the large variation of temperature. The regulations by authorities that are becoming more stringent, such as the application of the pressure vessel directive of the EU to valves, is leading to that it is no longer possible to meet the requirements of the most demanding categories with the ball valves manufactured using the state-of-the-art methods.

The object of the present invention is to provide a solution, which eliminates the above-mentioned quality problems of the present ball valves and makes possible the manufacture of ball valves meeting the pressure vessel regulations in all respects. In addition, the invention relates to a manufacturing technique, which can be applied to the manufacture of ball valves with both full and reduced apertures. The characterising features of the invention are recited in the characterising part of claim 1.

Thus, the solution of the invention comprises the machining of the faces of the tube and cover to be joined to each other so that they will fit tightly to each other, in which case the joining can be performed by beam welding, such as laser or electron beam welding, which is characterised in that no additional material is brought to the point of joining for achieving the welding joint. The joining is exclusively based on the welding beam having a melting effect on the faces to be joined to each other.

Advantages of the beam welding are that the welding performance is fast and that substantially lower heat has to be brought to the structure to be welded. Thus, a welding joint of uniform quality without root defects is achieved, the strength of which is better and which meets the requirements relating to pressure vessels. As also the risk of spatters is small in beam welding, the welding joints can be brought nearer to the tube ends and the valve ball without causing risks to the gaskets. This again means that the cover surrounding the valve ball and the tube ends becomes even shorter, due to which material is saved and the structure can be made more rigid than before. A modular manufacturing technique can advantageously be used in the manufacture, within which it is possible to achieve a wide product range with simple means of variation.

For the beam welding it is especially advantageous if the tube mantle contains turns or bends on both sides of the front face so that after penetrating the point of joining formed by the opposite faces, the welding beam hits the material of the tube mantle, to which it stops. The welding beam is then absorbed to the tube mantle so that the possibility of the spatters to spread along with the beam to the internal space of the cover is fully eliminated. The front face required by the solution can be advantageously provided with a step to be made to the tube mantle bevelled or perpendicular in relation to the axial direction.

The alignment of the welding beam is easiest, if the bevelled front face of the tube mantle is in an angle of approximately 30-60°, preferably in an angle of 45° in relation to the axial direction of the tube. The laser radiator or some other radiation source can then be kept at a suitable distance from both the tube mantle and the spindle sleeve to be perpendicularly attached to the sleeve-like cover. The welding beam being in the said angles, tubes made of materials of different thickness can be connected to a similar valve cover, and the same welding parameters can thus be used for different tubes.

According to the invention, also the said spindle with the surrounding sleeve rotating the valve ball can be installed in the valve using beam welding for the joining of the sleeve. An aperture has to be formed to the sleeve-like cover of the valve for the spindle and the sleeve surrounding it so that the edge of the aperture can be formed so that it is located in one plane parallel to the axis of the tubes. As the spindle with the surrounding sleeve is fitted into the aperture, the welding joint can be made in one plane in the beam welding in a way required by the quality requirements for beam welding. Also the mating faces of the edge of the aperture and the spindle sleeve to be joined together can be in an angle of 30-60°, preferably in an angle of 45° in relation to the axial direction of the tubes so that neither the spindle sleeve nor the tubes form an obstacle for the welding. If the said mating faces and the above-mentioned front face of the tube mantle are in the same angle in relation to the axial direction of the tubes, it is possible to perform the joining of the cover to the tube mantle and the joining of the sleeve surrounding the spindle to the cover successively without it being necessary to change the alignment of the source of the welding beam.

The invention is next described in more detail with the help of examples, referring to the enclosed drawings, in which
Figure 1 is a longitudinal section of the cover blank;
Figure 2 is the cross-section II-II of the cover blank in Fig. 1;
Figure 3 shows the forming of the cover blank to the sleeve-like cover of the ball valve with reciprocating moulding tools compressing the blank;
Figure 4 shows the sleeve-like cover of the ball valve formed by compression and the valve ball in longitudinal section;
Figure 5 is the cross-section V-V of the cover and valve ball in Fig. 4;
Figure 6 shows the cover of the ball valve with its valve ball, the tubes to be connected to the valve ball, and the spindle rotating the valve ball with its support sleeves and handles before joining the said parts together;
Figure 7 shows the parts in Fig. 6 assembled as a ball valve, which is joined by welding and provided with a reduced aperture, the Figure also depicting the sources of radiation and the welding beams directed from them to the welding joints;
Figure 8 shows a second embodiment of the ball valve with a full aperture, joined by beam welding;
Figure 9 shows the cover and the tube mantle welded to it, the material thickness of which is substantially the same, in enlarged scale; and
Figure 10 is similar to Fig. 9, showing an embodiment, in which the material thickness of the cover is larger than that of the tube mantle.

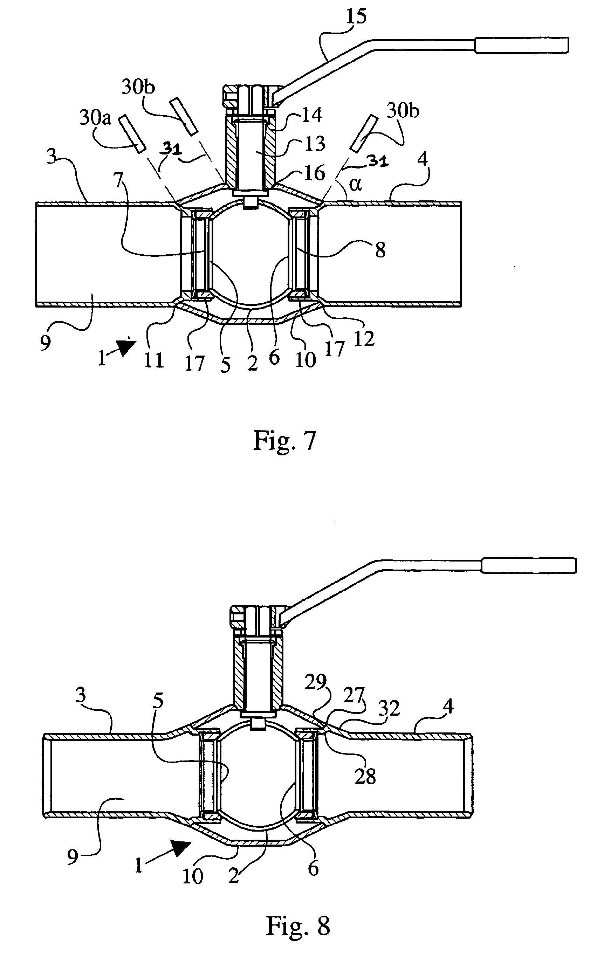

The ready-assembled ball valve 1 with a reduced aperture shown in Figure 7 is described first. The ball valve 1 comprises the valve ball 2, which works as the joint body between two tubes 3, 4 with round cross-section, connected to the valve. The valve ball 2 is hollow, and it comprises ports 5, 6, which are slightly reduced in relation to the tubes and which in the Figure are turned towards the tube ends 7, 8 so that the flow channel 9 formed by the tubes 3, 4 is open. The element that keeps the ball valve 1 together consists of the sleeve-like cover 10 tapered from both ends by compression, i.e. the so-called valve body, the ends of which are attached to the flanks of the tubes 3, 4 with the welding joints 11, 12. For opening and closing the ball valve 1, the spindle 13 is fastened to the valve ball 2, the spindle being surrounded by the support sleeve 14 and provided with the handle 15. The support sleeve 14 is fitted to the aperture made for it in the cover 10 and attached to it by the welding joint 16. Closing the valve is performed by rotating the spindle 13 and the valve ball 2 rotating with it 90° from the position in the Figure, using the handle 15 so that the closed flanks of the valve ball rotate against the ends 7, 8 of the tubes 3, 4. The ends 7, 8 of the tubes are provided with the gaskets 17 against the ball valve 2 for preventing leakage.

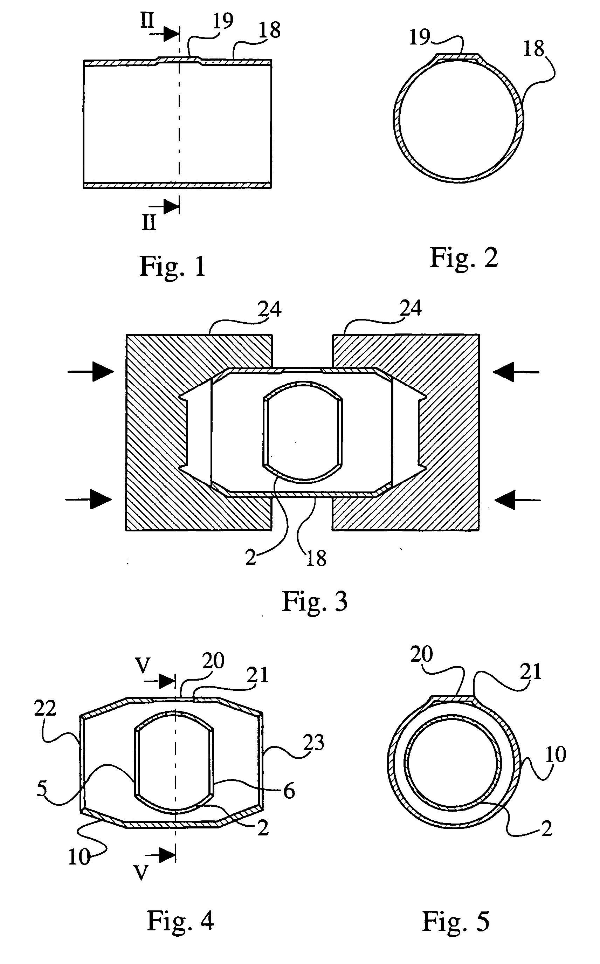

The steps according to the invention for the manufacture and assembly of the ball valve 1 with a reduced aperture appear from the Figures 1-7 in the drawings. The starting point is the cover blank 18 according to Figures 1 and 2, formed of the tube piece, the round seat 19 in the plane parallel to the longitudinal axis of the piece being machined to the cover blank for the subsequent fastening of the spindle 13 and its support sleeve 14. For the support sleeve 14 of the spindle, the aperture 20 is pierced at the place of the seat 19; the aperture can be seen in Figures 3-6 in the sleeve-like cover 10 of the valve, machined from the blank 18. The machining also comprises the bevelling of the edge 21 of the aperture 20 and the end faces 22, 23 of the generated cover 10 for the subsequent joining by beam welding. The conically bevelled end faces 22, 23 of the cover form an angle of 45° in relation to the axial direction of the tubes 3, 4.

The forming of the cover blank 18 according to Figures 1 and 2 to the sleeve-like cover 10 tapering conically towards its ends 22, 23 by compressing is performed by reciprocally moving moulding tools 24, according to Figure 3. The tools 24 are forced towards each other according to the arrows in Figure 3 until they bump into each other, after which the tools perform the return movement. Before compression the valve ball 2 has been brought to the interior of the cover blank 18, supported to appropriate temporary support elements (not shown). The valve cover 10 machined to its finished form as the result of compression is shown in Figures 4 and 5.

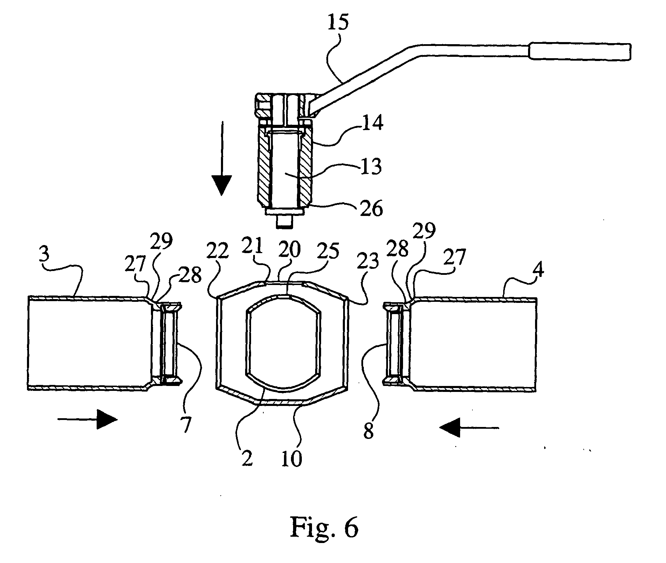

Figure 6 is a schematic presentation of the parts of the ball valve during the joining step. The end of the spindle 13 is attached to the hole 25 provided for it in the valve ball 2 so that the end face 26 of the support sleeve 14 of the spindle, bevelled similarly to the edge 21 of the aperture of the cover, is set to lean against the said edge. From the ends 22, 23 of the cover, the tubes 3, 4 are brought to the interior of the cover so that the ends 7, 8 of the tubes are sealed against the valve ball 2. The flanks of both the tubes 3, 4 have the front face 29 rotating conically around the tube and being restricted by the folds 27, 28, the front face being machined in the angle of 45° in relation to the axial direction of the tube, similar to the end faces 22, 23 of the cover. As the tubes 3, 4 have been brought to place, the front faces 29 are set tightly against the end faces 22, 23 of the cover to be joined by beam welding the tubes and the cover.

The said bringing together of the valve parts brings them to a position in relation to each other, in which they are in the finished ball valve 1 according to Figure 7. The joining together of the parts is performed by beam welding, and Figure 7 shows the source of radiation 30 and the welding beam 31, for example, laser beam generated by it in three different positions 30a-30c required by the welding of the joints 11, 12, 16. The inlet angle α of the welding beam 31 marked to the Figure is equal to the angle of 45° of the surfaces to be welded in relation to the axial direction of the tubes. The welds can be performed either by rotating the source of radiation 30 in relation to the stationary valve or keeping the source of radiation stationary and rotating the valve. It can be seen from Figure 7 that in the welding of the front faces 3, 4 of the tubes and the ends of the cover 10 the welding beam 13 penetrating the joint 11, 12 meets the material of the tube mantle, to which the travel of the beam stops.

Figure 8 shows the finished beam-welded ball valve 1 with full aperture, which differs from the one shown in Figure 7 in that the ports 5, 6 of the valve ball 2 generally correspond to the cross-sectional area of the tubes 3, 4 so that, because of this, the flow channel 9 formed by the tubes penetrates the valve without choking. In both the tubes 3, 4 the mating comprises the expansion 32, which is conical seen from the direction of the tube and for which the cover 10 tapering towards its ends forms a direct continuation. The expansion 32 is followed by successive turns 27, 28, restricting between them the front face 29, which conically reduces the tube mantle, the end of the cover being attached to the front face 29 by beam welding as in the form of the embodiment described above, cf. Figures 6 and 7.

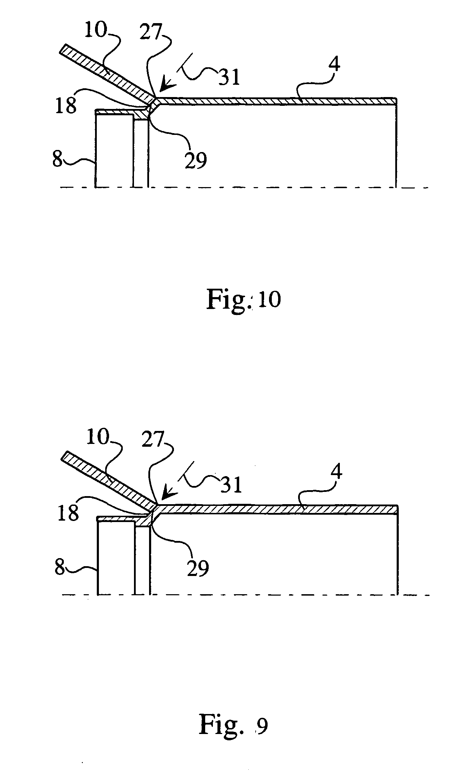

Figures 9 and 10 are intended to illustrate the possibility offered by the invention to use cover parts 10 with similar material thickness in connection with tubes 4 with different material thickness. In Figure 9, the material thickness of the cover 10 and the mantle of the tube 4 is essentially the same, when again in Figure 10, the cover 10, which is the same as in Figure 9, has a bigger material thickness than the mantle of the tube 4. The front face 29 restricted by the turns 27, 28 has similar dimensions in each case, and the beam welding by the welding beam 31 directed according to the surface can in both cases be performed using the same welding parameters.

It is obvious for one skilled in the art that the embodiments of the invention are not restricted to the examples described in detail above, but they may vary within the scope of the following claims.

## Claims

1. Method for the manufacture of a ball valve (1) between two tubes (3, 4), the ends (7, 8) of the tubes (3, 4) being sealed against a rotatable valve ball (2) opening and closing the valve (1), and the valve ball (2) and the tub ends (7, 8) being surrounded by a sleeve-like cover (10) having end faces (22, 23) to be joined to the mantle surfaces of the tubes (3, 4),
**characterised by the steps of:**
- forming a front face (29) of the mantle of each one of the two tubes (3; 4) by a bevelling or stepping, said bevelling or stepping narrowing said mantle towards the end (7, 8) of the tube (3; 4);
- bevelling each one of the end faces (22, 23) of the sleeve-like cover (10) such that the bevelled end faces (22, 23) are directed similarly to the front face (29) of the mantle of the corresponding tube (3; 4);
- bringing the front face (29) of the mantle of each tube (3; 4) against the corresponding end face (22, 23) of the sleeve-like cover (10);
- joining the tubes (3; 4) and the sleeve-like cover (10) to each other by beam welding by directing the welding beam (31) between said faces (29, 29; 22, 23) brought against each other, following their direction.

2. Method according to claim 1, **characterised in that** the mantle of the tube (3, 4) has turns (27, 28) on both sides of the front face (29) so that the welding beam penetrating the joint (11, 12) formed by said respective faces (29, 29; 22, 23) brought against each other hits the turn and the material of the tube mantle below.

3. Method according to claim 1 or 2, **characterised in that** the bevelled front face (29) of the mantle of the tube (3, 4) is in an angle of approximately 30-60°, preferably approximately 45° in relation to the axial direction of the tube (3, 4).

4. Method according to one of the preceding claims, **characterised in that** it is used for the manufacture of a ball valve (1) with a reduced aperture (5, 6).

5. Method according to one of the claims 1 - 3, **characterised in that** it is used for the manufacture of a ball valve (1) with full aperture so that the mantle of the tube (3, 4) has been expanded (32) and then narrowed for achieving the bevelled front face (29) for joining the sleeve-like cover (10).

6. Method according to one of the preceding claims, **characterised in that** the cover (10) is attached to the mantle of the tube (3, 4) by laser welding (30, 31).

7. Method according to one of the claims 1 - 5, **characterised in that** the cover (10) is attached to the mantle of the tube (3, 4) by electron beam welding.

8. Method according to one of the preceding claims, **characterised in that** an aperture (20) is provided to the sleeve-like cover (10), to which aperture the spindle (13) rotating the valve ball (2) and the surrounding support sleeve (14) are fitted, the support sleeve (14) being joined to the edge (21) of the aperture by beam welding.

9. Method according to claim 8, **characterised in that** the sleeve-like cover (10) is shaped so that the edge (21) of the aperture (20) is located in one plane parallel to the axis of the tubes (3, 4).

10. Method according to claim 9, **characterised in that** the mating faces (21, 26) of the edge (21) of the aperture (20) and the support sleeve (14) of the spindle, which are joined together by beam welding, are in an angle of 30-60°, preferably approximately 45° in relation to the axial direction of the tubes (3, 4).

## Patentansprüche

1. Verfahren zur Herstellung eines Kugelventils (1) zwischen zwei Rohren (3, 4), wobei die Enden (7, 8) der Rohre (3, 4) gegen eine drehbare Ventilkugel (2) abdichten, die das Ventil (1) öffnet und schließt, wobei die Ventilkugel (2) und die Rohrenden (7, 8) von einer hülsenartigen Abdeckung (10) umgeben sind, die Stirnflächen (22, 23) aufweist, die mit den Mantelflächen der Rohre (3, 4) zu verbinden sind,
**gekennzeichnet durch** die Schritte:
Formen einer vorderen Fläche (29) des Mantels eines jeden Rohres (3;4) mittels Abschrägen oder Abstufen, wobei das Abschrägen oder Abstufen den Mantel in Richtung des Endes (7, 8) des Rohres (3, 4) verjüngt;
Abschrägen einer jeden der Stirnflächen (22, 23) der hülsenartigen Abdeckung (10), so dass die abgeschrägten Stirnflächen (22, 23) ähnlich der vorderen Fläche (29) des Mantels des entsprechenden Rohres (3; $) ausgerichtet sind;
Fügen der vorderen Fläche (29) des Mantels jedes Rohres (3; 4) an die entsprechende Stirnfläche (22, 23) der hülsenartigen Abdeckung (10);
Verbinden der Rohre (3; 4) und der hülsenartigen Abdeckung (10) miteinander **durch** Strahlschweißen, indem der Schweißstrahl (31) zwischen die zusammengefügten Flächen (29, 29; 22, 23) gerichtet wird, deren Richtung folgend.

2. Verfahren nach Anspruch 1, **dadurch gekennzeichnet, dass** der Mantel des Rohres (3, 4) Wendungen (27, 28) an beiden Seiten der vorderen Fläche (29) aufweist, so dass der Schweißstrahl, der die von den jeweiligen zusammengefügten Flächen (29, 29; 22, 23) gebildete Verbindung (11, 12) durchdringt, die Wendung und das Material des darunterliegenden Rohrmantels umlegt.

3. Verfahren nach Anspruch 1 oder 2, **dadurch gekennzeichnet, dass** die abgeschrägte vordere Fläche (29) des Mantels des Rohres (3, 4) in einem Winkel von etwa 30-60°, vorzugsweise 45°, bezüglich der Axialrichtung des Rohres (3, 4) angeordnet ist.

4. Verfahren nach irgendeinem der vorangehenden Ansprüche, **dadurch gekennzeichnet, dass** es für die Herstellung eines Kugelventils (1) mit einer reduzierten Öffnung (5, 6) verwendet wird.

5. Verfahren nach irgendeinem der Ansprüche 1 bis 3, **dadurch gekennzeichnet, dass** es für die Herstellung eines Kugelventils (1) mit einer vollen Öffnung verwendet wird, so dass der Mantel des Rohres (3, 4) erweitert (32) worden ist und anschließend verengt worden ist, um die abgeschrägte vordere Fläche (29) zum Verbinden der hülsenartigen Abdeckung (10) zu erzeugen.

6. Verfahren nach irgendeinem der vorangehenden Ansprüche, **dadurch gekennzeichnet, dass** die Abdeckung (10) mittels Laserschweißen (30, 31) am Mantel des Rohres (3, 4) angebracht wird.

7. Verfahren nach irgendeinem der Ansprüche 1 bis 5, **dadurch gekennzeichnet, dass** die Abdeckung (10) mittels Elektronenstrahlschweißen am Mantel des Rohres (3,4) angebracht wird.

8. Verfahren nach irgendeinem der vorangehenden Ansprüche, **dadurch gekennzeichnet, dass** an der hülsenartigen Abdeckung (10) eine Öffnung (20) vorgesehen wird, in die die Spindel (13), die die Ventilkugel (2) dreht, und die umgebende Unterstützungshülse (14) eingesetzt werden, wobei die Unterstützungshülse (14) mittels Strahlschweißen mit der Kante (21) der Öffnung verbunden wird.

9. Verfahren nach Anspruch 8, **dadurch gekennzeichnet, dass** die hülsenartige Abdeckung (10) so geformt ist, dass die Kante (21) der Öffnung (20) in einer Ebene parallel zur Achse der Rohre (3, 4) angeordnet ist.

10. Verfahren nach Anspruch 9, **dadurch gekennzeichnet, dass** die Fügeflächen (21, 26) der Kante (21) der Öffnung (20) und der Unterstützungshülse (14) der Spindel, die mittels Strahlschweißen verbunden werden, in einem Winkel von 30-60°, vorzugsweise 45°, bezüglich der Axialrichtung der Rohre (3, 4) angeordnet sind.

## Revendications

1. Procédé pour la fabrication d'un clapet à bille (1) entre deux tubes (3, 4), les extrémités (7, 8) des tubes (3, 4) étant étanches contre une bille de clapet rotatif (2) ouvrant et fermant le clapet (1), et la bille de clapet (2) et les extrémités de tube (7, 8) étant entourées par un couvercle en forme de manchon (10) ayant des faces d'extrémité (22, 23) destinées à être assemblées aux surfaces de manteau des tubes (3, 4),
**caractérisé par** les étapes consistant à :
former une face avant (29) du manteau de chacun des deux tubes (3 ; 4) par un biseautage ou un étagement, ledit biseautage ou étangement rétrécissant ledit manteau vers l'extrémité (7, 8) du tube (3 ; 4) ;
biseauter chacune des faces d'extrémité (22, 23) du couvercle en forme de manchon (10) de sorte que les faces d'extrémité biseautées (22, 23) sont dirigées de manière similaire vers la face avant (29) du manteau du tube (3 ; 4) correspondant ;
amener la face avant (29) du manteau de chaque tube (3 ; 4) contre la face d'extrémité (22, 23) correspondante du couvercle en forme de manchon (10) ;
assembler les tubes (3 ; 4) et le couvercle en forme de manchon (10) entre eux par soudage par faisceau en dirigeant le faisceau de soudage (31) entre lesdites faces (29, 29 ; 22, 23) amenées l'une contre l'autre, suivant leur direction.

2. Procédé selon la revendication 1, **caractérisé en ce que** le manteau du tube (3, 4) a des tours (27, 28) sur les deux côtés de la face avant (29) de sorte que le faisceau de soudage pénétrant dans l'assemblage (11, 12) formé par lesdites faces respectives (29, 29 ; 22, 23) amenées l'une contre l'autre, heurte le tour et le matériau du manteau de tube au-dessous.

3. Procédé selon la revendication 1 ou 2, **caractérisé en ce que** la face avant biseautée (29) du manteau du tube (3, 4) est dans un angle d'environ 30-60°, de préférence approximativement 45° par rapport à la direction axiale du tube (3, 4).

4. Procédé selon l'une quelconque des revendications précédentes, **caractérisé en ce qu'**il est utilisé pour la fabrication d'un clapet à bille (1) avec une ouverture réduite (5, 6).

5. Procédé selon l'une quelconque des revendications 1 à 3, **caractérisé en ce qu'**il est utilisé pour la fabrication d'un clapet à bille (1) avec ouverture totale de sorte que le manteau du tube (3, 4) a été dilaté (32) et ensuite rétréci pour obtenir la face avant biseautée (29) pour assembler le couvercle en forme de manchon (10).

6. Procédé selon l'une quelconque des revendications précédentes, **caractérisé en ce que** le couvercle (10) est fixé sur le manteau du tube (3, 4) par soudage au laser (30, 31).

7. Procédé selon l'une des revendications 1 à 5, **caractérisé en ce que** le couvercle (10) est fixé au manteau du tube (3, 4) par soudage par faisceau d'électrons.

8. Procédé selon l'une des revendications précédentes, **caractérisé en ce qu'**une ouverture (20) est prévue sur le couvercle en forme de manchon (10), sur laquelle ouverture, l'axe (13) faisant tourner la bille de clapet (2) et le manchon de support périphérique (14) sont montés, le manchon de support (14) étant assemblé au bord (21) de l'ouverture par le soudage par faisceau.

9. Procédé selon la revendication 8, **caractérisé en ce que** le couvercle en forme de manchon (10) est formé de sorte que le bord (21) de l'ouverture (20) est situé dans un plan parallèle à l'axe des tubes (3, 4).

10. Procédé selon la revendication 9, **caractérisé en ce que** les faces de couplage (21, 26) du bord (21) de l'ouverture (20) et le manchon de support (14) de l'axe, qui sont assemblés par soudage par faisceau, sont dans un angle de 30-60°, de préférence approximativement 45° par rapport à la direction axiale des tubes (3, 4).
